# EUROPEAN PATENT APPLICATION

(11) **EP 1 557 712 A1**
(43) Date of publication of application: **27.07.2005**
(21) Application number: 05250293.7
(22) Date of filing: 21.01.2005
(51) Int. Cl.: G02F 1/13

(54) **Circular polariser arrangements for transmissive and transflective chiral nematic liquid crystal displays**

(30) Priority: 23.01.2004 GB 0401510
(71) Applicant: VARINTELLIGENT (BVI) LIMITED, Tortola, British Virgin Islands (VG)
(72) Inventor: Lee, Richard C.H., Tswung Kwan O (HK); Tsang, Fu On, Tswung Kwan O (HK)
(74) Representative: Johnson, Terence Leslie

(57) **Abstract**

A full spectrum black-and-white chiral nematic liquid crystal display is presented comprising a chiral nematic liquid crystal cell of controllable planar structure and focal conic structure, the cell comprising chiral nematic liquid crystal material between two transparent substrates having electrodes; and the cell being arranged between two circular polarizers, wherein at least one circular polarizer is of opposite handedness to the chiral nematic liquid crystal material. In some configurations there may be a light source. Embodiments of transmissive and transflective type displays are presented in which both front and rear circular polarisers have the same handedness or the front polariser has the opposite handedness to the liquid crystal medium and the rear polariser.

## Description

This invention describes a new display configuration to achieve high contrast full spectrum black-and-white display. For example transmissive and transflective mode chiral nematic liquid crystal display configuration.

Liquid crystal displays (LCDs) have been the subject of research for many years, they are now widely used in applications across a number of areas. However, severe viewing angle dependence and high power consumption in backlight are major drawbacks for some applications. There has accordingly been active research in bistable chiral nematic liquid crystal displays which have found applications in many areas in the last few decades.

One of the main features in chiral nematic displays is that the bright state and the dark state are bistable, i.e. stable even when the voltage is not connected. The images are retained even under no energy, and the bistability nature results in image retention and flicker-free viewing. Moreover, the driving methods and electro-optic response of chiral nematic displays are different from classical liquid crystal displays and result in no limitation on the maximum multiplexing of the display.

The bright state is the result of the Bragg reflection from the planar liquid crystal structure and there are many attractive color combinations in the liquid crystal materials and the back paint. Owing to the reflective nature, a bistable chiral nematic liquid crystal display has a very low power consumption and no backlight is normally required.

There are in such chiral nematic liquid crystal material two stable states, namely a planar state and a focal conic state. These two stable states are retained even when power is off.

In the planar state, liquid crystal molecules are aligned in a helix form where the axis of the helix is perpendicular to the display plane. Circular polarized light of wavelength matching the pitch and handedness of the helix is reflected by Bragg rejection. The pitch of the helix structure and hence peak reflection wavelength can be adjusted to a visible range or invisible range of the spectrum. The remaining spectrum passes through the chiral nematic liquid crystal materials and the polarization is unaffected. Moreover, for opposite circular polarization, the entire spectrum passes through the chiral nematic liquid crystal materials and the polarization is not affected. Thus, only light of certain circular polarization and wavelength spectrum is reflected and the rest of the light passes through the chiral nematic liquid crystal materials. The handedness of the Bragg reflection matches with the chirality (handedness) of the chiral nematic liquid crystal materials in the planar state. The reflected wavelength depends on the pitch of the chiral nematic liquid crystal materials. On the other hand, in the focal conic state, the liquid crystals form micro-domains and each domain is a small helix structure and the helical axes are highly tilted from the display normal, more or less parallel to the plane of the display. Light is scattered (backwardly, sidely and mainly forwardly) at the domain boundaries where there is an abrupt change in the optical refractive index. The focal conic state is transparent with little haze, and the polarization of transmitted light is destroyed and the transmission is independent of the wavelength of the incoming light. Thus when the chiral nematic liquid crystal materials are in focal conic state, most of the light passes through (mainly forward scattering) and the outgoing light is unpolarized.

According to the present invention there is provided a full spectrum black-and-white chiral nematic liquid crystal display comprising a chiral nematic liquid crystal cell of controllable planar structure and focal conic structure, the cell comprising chiral nematic liquid crystal material between two transparent substrates having electrodes; and the cell being arranged between two circular polarizers, wherein at least one circular polarizer is of opposite handedness to the chiral nematic liquid crystal material.

This invention discloses novel optical configurations for transmissive and transflective mode high contrast full spectrum black-and-white bistable chiral nematic liquid crystal displays. The present invention overcomes the problems with previous LCD displays. The present invention overcomes the problems with previous LCD displays that include that when the ambient light is weak, one has to use a front light to enhance the brightness of chiral nematic liquid crystal displays. However, in some applications, front light is not appropriate or the cost of a front light-guide is too high.

In many portable applications, very high information content displays with good contrast and very low power consumption are sought. Transmissive, transflective and reflective chiral nematic liquid crystal displays have the particular advantages of having availability in very high resolution, image retention, high contrast, and very wide viewing angles. In addition by adding a color filter, the transmissive, transflective and reflective chiral nematic liquid crystal displays can be modified to full color or area color.

Thus using the invention, new transmissive and transflective bistable chiral nematic liquid crystal display configurations are disclosed. The displays have full spectrum white and with high contrast. They also have very low power consumption and any driving schemes suitable for driving chiral nematic liquid crystal displays can be used for driving the display of this invention. When a color filter is added to the optical configuration, a full color or area color bistable chiral nematic liquid crystal display results.

Chiral nematic liquid crystal displays embodying the invention are hereinafter described. by way of example, with reference to the accompanying drawings.
Figure 1 depicts the first optical configuration of the black-and-white chiral nematic liquid crystal display in this invention.
Figure 2 depicts the second optical configuration of the black-and-white chiral nematic liquid crystal display in this invention.
Figure 3 depicts the third optical configuration of the black-and-white chiral nematic liquid crystal display in this invention.
Figure 4 shows the reflection and transmission properties of the planar state where the incoming light is of the same circular polarization as the chiral nematic liquid crystal material.
Figure 5 shows the reflection and transmission properties of the planar state where the incoming light is of opposite circular polarization as the chiral nematic liquid crystal material.
Figure 6 shows the reflection and transmission properties of the chiral nematic liquid crystal material in the focal conic state.
Referring to the drawings, in which like parts are indicated by like numbers. In general, chiral nematic liquid crystal displays 1 are disclosed comprising essentially laminates of, as viewed from in front or the top in the drawings, a linear polarizer 2, a quarter wave retardation film 3, front and rear transparent substrates 4,5 with conductive electrodes and a chiral nematic liquid crystal 6 sandwiched therebetween, a quarter wave retardation film 7, a linear polarizer 8 and a transflector 10.

The linear polarizer 2 and quarter wave retardation film 3 form an opposite circular polarization to the chiral nematic display.

A transflector element is one that provides some reflection and some transmission. Transflector means a semi-transmissive reflector. In other words, light is both reflected (dimmed) and transmitted (dimmed) from either direction. In the optical configuration of the display set up described here, the transflector element reflects some light back to the rear polarizer when light is coming from the rear polarizer. On the other hand, light from a backlight can also be transmitted through the transflector. Thus this new configuration can simultaneously operate as reflective mode (for ambient light source) and transmissive mode (for backlight).

The entire optical configuration LCD is in transflective mode. Transflectors enable the display to be readable in both a strong ambient environment and in a dark environment.

A chiral nematic liquid crystal cell is the term used to refer to the liquid crystal cell comprising controllable chiral nematic liquid crystal materials 6 sandwiched between two opposite transparent electrodes surfaces and these transparent electrodes are coated on transparent substrates 4, 5. The transparent electrodes and transparent substrates 4, 5 do not alter any polarization when light passes through. Examples of transparent electrodes are indium tin oxide or tin oxide and examples of transparent substrates are glass or plastic. A simple way of making a circular polarizer is to laminate a linear polarizer 2, 8 with a quarter wave retardation film 3, 7 such that the angle between the linear polarizer 2, 8 and the quarter wave retardation film 3, 7 is at 45°. Adjusting the angle between the linear polarizer and the quarter wave retardation film clockwise by 45° or anticlockwise by 45° will give a left hand circular polarizer or right hand circular polarizer.

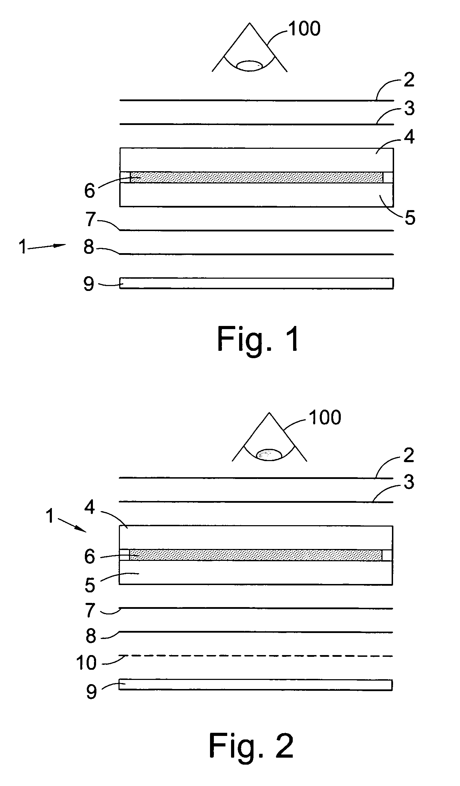

Figure 1 shows a first optical configuration of the chiral nematic liquid crystal display embodying the invention.

The embodiment of Figure 1 is a black-and-white full spectrum transmissive mode chiral nematic liquid crystal display. This configuration comprises one front circular polarizer 2, 3, one chiral nematic liquid crystal cell, one rear circular polarizer 7, 8 and one backlight 9. The chiral nematic liquid crystal material 6 has the Bragg reflection of any wavelength spectrum (visible or invisible) and any circular polarization. Both the front circular polarizer 2, 3 and the rear circular polarizer 7, 8 are of opposite handedness to the chirality (handedness) of the chiral nematic liquid crystal material 6. The arrangement of the front 2, 3 and rear 7, 8 circular polarizers is in such a way that the quarter wave retardation films 3, 7 are facing the chiral nematic liquid crystal cell. A backlight 9 is placed under the rear circular polarizer 7, 8.

The optical bright (white) "ON" state of the configuration given by Figure 1 is when the chiral nematic liquid crystal material 6 is in the planar state and the optical dark "OFF" state is when the chiral nematic liquid crystal material 6 is in the focal conic state. Grey scale is when there is a mixture of planar and focal conic state.

The optical path mechanism in the case of bright "ON" state follows. When incoming unpolarized light is emitted from the backlight 9, it hits the rear circular polarizer 7, 8. The light becomes circularly polarized with polarization of opposite handedness to the polarization of the chiral nematic liquid crystal materials 6. This entire circularly polarized light of opposite polarization will pass through the planar state chiral nematic liquid crystal materials 6 and then the front circular polarizer 2, 3. Since the transmission of light passing through the chiral nematic liquid crystal materials 6 is wavelength independent, the light is of full spectrum wavelength when the backlight is of full spectrum. If the backlight is unpolarized, the output light seen by the viewer 100 contains entirely one circular polarization and the light intensity is 50% of the light intensity of the backlight.

In the dark "OFF" state, when the chiral nematic liquid crystal material is in the focal conic state the optical light path mechanism is as follows. Light coming out from the backlight 9 is unpolarized. This light is then polarized by the rear circular polarizer and the intensity is halved. This circularly polarized light then enters into the focal conic chiral nematic liquid crystal 6 materials and becomes unpolarized. Experiments show that this unpolarized light coming out from the focal conic state contains both circular polarizations but the majority is of the circular polarization of opposite handedness to the handedness of the circularly polarized light entering into the focal conic state (i.e. the majority of the outgoing light is of the same handedness as the chirality of the chiral nematic liquid crystal materials 6). This unpolarized light (containing both circular polarizations) enters the front circular polarizer and then becomes polarized. Thus the overall light passing through the entire display when the chiral nematic liquid crystal material is in a focal conic state is low and a dark state is achieved.

Figure 2 shows a second optical configuration of the chiral nematic liquid crystal display embodying the invention.

The embodiment shown in Figure 2 is a full spectrum black-and-white transflective mode chiral nematic liquid crystal display. This configuration comprises one front circular polarizer 2, 3, one chiral nematic liquid crystal cell, one rear circular polarizer 7, 8 , one transflector 10 and one backlight 9. The chiral nematic liquid crystal material 6 has the Bragg reflection of any wavelength spectrum (visible or invisible) and any circular polarization. Both the front circular polarizer 2, 3 and the rear circular polarizer 7, 8 are of opposite handedness to the chirality of the chiral nematic liquid crystal material 6. The arrangement of the front 2, 3 and rear 7, 8 circular polarizers is in such a way that the quarter wave retardation films 3, 7 are facing the chiral nematic liquid crystal cell. A transflector 10 is arranged under the rear polarizer 7, 8. Then a backlight 9 is arranged under the transflector.

The optical bright "ON" state of the configuration given by Figure 2 is when the chiral nematic liquid crystal material 6 is in the planar state and the optical dark "OFF" state is when the chiral nematic liquid crystal material 6 is in the focal conic state. Grey scale is when there is a mixture of planar and focal conic state.

The optical path mechanism of this transflective mode consists of two cases depending on the direction of light source, either the rear light from the backlight 9 or ambient light from the front viewer 100 direction. For the light source from the backlight 9, the mechanism is identical to the optical path mechanism previously explained in the transmissive mode as above.

For the light source from the front viewer 100 direction, firstly for the bright "ON" state when the chiral nematic liquid crystal material 6 is at the planar state. Unpolarized full spectrum white light enters the front circular polarizer 2, 3. It becomes circularly polarized with polarization of opposite handedness to the chiral nematic liquid crystal materials 6 and the intensity of the light source is halved. This opposite circularly polarized light then enters into the planar state chiral nematic materials 6. All of this circularly polarized light will pass through the chiral nematic liquid crystal material 6 as well as the rear circular polarizer 7, 8 without any loss in intensity. Since the rear linear polarizer 8 (note that the circular polarizer 7, 8 is made up by a quarter wave retardation film 7 and a linear polarizer) is facing the transflector 10, the polarized light exiting from the rear polarizer 7, 8 is reflected back by the transflector 10 without any change in polarization. The reflected light returns back to the rear circular polarizer 7, 8. The return-path circularly polarized light before re-entering the chiral nematic liquid crystal material 6 is still of opposite circular polarization to the chirality of the chiral nematic liquid crystal materials. The light passes through the chiral nematic liquid crystal materials 6 and the front circular polarizer 2, 3 without intensity loss and the intensity of the reflected light seen by the viewer 100 is 50% as the original ambient light and is full spectrum white.

Considering the dark "OFF" state where the chiral nematic liquid crystal material 6 is at the focal conic state and the ambient light is from the front viewer 100 direction. Unpolarized full spectrum white light enters the front circular polarizer 2, 3. The light becomes circularly polarized with polarization of opposite handedness to the chiral nematic liquid crystal materials 6 and the intensity is halved. This circularly polarized light then enters into the focal conic state chiral nematic liquid crystal materials 6. The light then becomes unpolarized. Experiments show that the majority of outgoing light from the focal conic chiral nematic materials 6 has reversed polarization (i.e. the majority is of the same circular polarization as the chiral nematic liquid crystal materials 6). The unpolarized light is then polarized by the rear circular polarizer 7, 8 and light intensity is reduced. Since the rear linear polarizer 8 (note that the circular polarizer 7, 8 is made up by a quarter wave retardation film 7 and a linear polarizer 8) is facing the transflector 10, the polarized light coming out from the rear polarizer 7, 8 is then reflected by the transflector 10 without any change in polarization. The reflected light returns back through the rear circular polarizer. The return-path circularly polarized light before re-entering the chiral nematic liquid crystal material is still of opposite circular polarization to the chirality of the chiral nematic materials. The light then passes through the focal conic chiral nematic materials 6 and becomes unpolarized. A major portion of this return-path light has its polarization reversed (i.e. the major portion is of the same handedness as the chirality of the chiral nematic liquid crystal materials 6). This return-path unpolarized light is then polarized by the front circular polarizer 2, 3. Over the entire optical path, a large portion of light is cut and a dark "OFF" state is achieved.

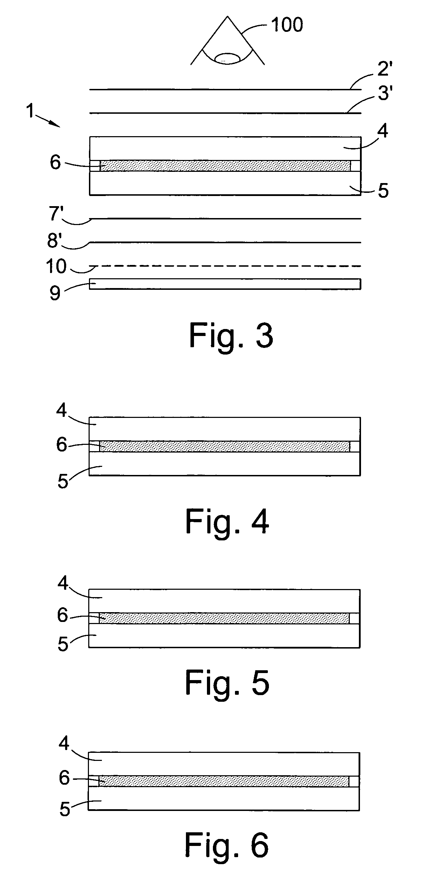

Figure 3 shows a third optical configuration of the chiral nematic liquid crystal display embodying the invention. The embodiment shown in Figure 3 is a full spectrum black-and-white transflective mode chiral nematic liquid crystal display. This configuration comprises one front circular polarizer 2', 3', one chiral nematic liquid crystal cell, one rear circular polarizer 7', 8' , one transflector 10 and one backlight 9. The chiral nematic liquid crystal material 6 has the Bragg reflection of any wavelength spectrum (visible or invisible) and any circular polarization. The front circular polarizer 2', 3' is of opposite handedness to the chirality of the chiral nematic liquid crystal material 6. The rear circular polarizer 7', 8' is of the same handedness as the chirality of the chiral nematic liquid crystal material 6. The arrangement of the front 2', 3' and rear 7', 8' circular polarizers is such that the quarter wave retardation films are facing the chiral nematic liquid crystal cell. A transflector 10 is arranged under the rear polarizer 7', 8'. A backlight 9 is arranged under the transflector 10.

The optical bright "ON" state of the configuration given by Figure 3 is when the chiral nematic liquid crystal material 6 is in the focal conic state and the optical dark "OFF" state is when the chiral nematic liquid crystal material 6 is in the planar state. Grey scale is when there is a mixture of planar and focal conic state.

The optical path mechanism of this transflective mode consists of two cases depending on the direction of light from the light source, either the rear light from the backlight 9 or ambient light from the front viewer 100 direction.

Firstly, when the rear light is from the backlight 9 and the chiral nematic liquid crystal material 6 is at a focal conic state. Unpolarized light coming out from the backlight 9 passes through the transflector 10 and then the rear circular polarizer 7', 8'. The light is polarized (with the same handedness as the chiral nematic liquid crystal materials 6) and the light intensity is halved. The light then enters the focal conic chiral nematic liquid crystal materials 6. The light is then unpolarized and this de-polarization is wavelength independent. Experiments show that the majority of the light has the polarization reversed (i.e. this majority is of opposite handedness to the chiral nematic liquid crystal materials). The unpolarized light is then polarized by the front circular polarizer 2', 3'. The remaining light is of good intensity and is seen by the viewer 100.

The dark state is when the chiral nematic liquid crystal material is in a planar state. Unpolarized light coming out from the backlight 9 passes through the transflector 10 and then becomes polarized by the rear circular polarizer 7', 8' of the same handedness as the chiral nematic liquid crystal materials 6. Part of the spectrum of this circularly polarized light (with polarization of the same handedness as the chiral nematic liquid crystal materials) is reflected back to the rear circular polarizer 7', 8' by the Bragg reflection and the remaining spectrum passes through the chiral nematic liquid crystal materials 6. The polarized light out through the chiral nematic liquid crystal materials 6 is then totally blocked by the front circular polarizer 2', 3'. Moreover, the polarized light reflected by the planar chiral nematic liquid crystal materials 6 is reflected back to the backlight 9. Therefore, no light will be seen by the viewer 100 and a dark state is achieved.

Considering the ambient light from the viewer direction, for the bright state when the chiral nematic liquid crystal material 6 is at focal conic state, unpolarized ambient light goes into the front circular polarizer 2', 3' and is then polarized and then enters the chiral nematic liquid crystal materials 6. The light then becomes unpolarized by the focal conic chiral nematic liquid crystal materials 6. Experiments show that the majority of the light has its polarization is reversed (i.e. the majority is then of the same handedness as the chiral nematic liquid crystal materials 6). This unpolarized light is then polarized by the rear polarizer 7', 8'. Since the rear linear polarizer 8' (note that the circular polarizer is made up by a quarter wave retardation film 7' and a linear polarizer 8') is facing the transflector 10 , the polarized light is reflected by the transflector 10 without any polarization change. The light then re-enters the rear polarizer 7', 8' and then becomes unpolarized by the focal conic chiral nematic materials 6 (this unpolarized light has its major portion of opposite handedness to the chiral nematic liquid crystal materials). Finally the unpolarized light is polarized by the front polarizer 2', 3' and is seen by the viewer 100. This results in the bright state.

As for the dark state, when the chiral nematic material 6 is in a planar state. Unpolarized ambient light is polarized by the front circular polarizer 2', 3'. Since the front circular polarizer 2', 3' is of opposite handedness to the polarization of the chiral nematic liquid crystal materials 6, this polarized light will entirely pass through the planar state chiral nematic liquid crystal materials 6, but the light is then totally blocked by the rear circular polarizer 7', 8'. No light will be reflected to the viewer 100, giving a dark state.

It will be appreciated that the above described embodiments are given by way of example only and that various modifications may be made thereto without departing from the scope of the invention.

In the above three embodiments of the optical mode configurations, planar structure and focal conic structure can co-exist, that is, the chiral nematic liquid crystal material contains both planar state and focal conic state within a certain area. Different grey scale is achieved by different ratio of domains at planar structure and focal conic structure of the chiral nematic liquid crystal materials. Different tones of grey scales can be achieved by controlling different proportions of planar structure and focal conic structure domains in a certain area by any chiral nematic liquid crystal display grey scale driving schemes. The planar states and focal conic states of the invented optical mode configurations are stable even when the power is disconnected.

Full "ON" and full "OFF", different ratios of planar and focal conic structures can be controlled by any chiral nematic liquid crystal display driving schemes. For example, the these optical modes are applicable in the prior art driving schemes such as amplitude modulation, pulse width modulation, 3-phase dynamic driving, 5-phase dynamic driving, cumulative driving, dual frequency driving and multiple driving. Driving schemes are described, for example, in US5251048, US5384067, US5625477, US5644330, US5748277, US5877826, US5889566, US5933203, US6133895, US6154190, US6204835, US6268839, US6268840B1, US6320563, EP1152390A2, US2001/0024188A1, etc. Moreover, the threshold voltage of the chiral nematic material can be lowered by a larger pitch chiral nematic material.

In the case of dark ambient environments, the backlight can be turned on. The above-described invented optical mode configurations can be adopted in all chiral nematic liquid crystal display applications such as handheld devices, information boards and billboards. For example, in high information handheld browsing and reading devices, the invented transflective modes of black-and-white and full color can be well applied where a very low power consumption, wide viewing angles and readable in all lighting conditions are required.

Further advantages of the present invention include:
1. The chiral nematic liquid crystal cell is sandwiched between the front circular polarizer and the rear circular polarizer.
2. The chiral nematic liquid crystal material has the Bragg reflection spectrum of any peak wavelength and of any circular polarization.
3. Both the front circular polarizer and the rear circular polarizer are of opposite handedness as the chirality of the chiral nematic liquid crystal materials.
4. The front circular polarizer is of opposite handedness and the rear circular polarizer is of the same handedness as the chirality of the chiral nematic liquid crystal materials.
5. The light going into and coming out from the chiral nematic liquid crystal materials is circularly polarized.
6. The transparent electrodes are electrically conductive.
7. The electrode is indium tin oxide or tin oxide.
8. There is a backlight under the rear circular polarizer.
9. The optically "ON" bright state is of full spectrum white.
10. The display is made to full color or area color by a color filter at any position inside the structure.
11. The circular polarizers are wideband or otherwise.
12. There is a transflector placed between the rear circular polarizer and the backlight
13. The device is a transmissive liquid crystal display and the optically "ON" bright state is when the chiral nematic material liquid crystal is at planar state.
14. The device is a transmissive liquid crystal display and the optically "OFF" dark state is when the chiral nematic liquid crystal material is at focal conic state.
15. The device is a transflective liquid crystal display and the optically "ON" bright state is when the chiral nematic liquid crystal material is at planar state.
16. The device is a transflective liquid crystal display and the optically "OFF" dark state is when the chiral nematic liquid crystal material is at focal conic state.
17. The device is a transflective liquid crystal display and the optically "ON" bright state is when the chiral nematic liquid crystal material is at focal conic state.
18. The device is a transflective liquid crystal display and the optically "OFF" dark state is when the chiral nematic liquid crystal material is at planar state.
19. The optically grey scale is when the chiral nematic material has planar and focal conic states co-exist in the pixel area.
20. The LCD has static driving scheme(s).
21. The LCD has active matrix driving scheme(s).
22. The LCD has passive matrix driving scheme(s).
23. The LCD has grey scale driving scheme(s).
24. The LCD has dynamic driving scheme(s).
25. The LCD has dual-frequency driving scheme(s).
26. The LCD has cumulative driving scheme(s).
27. The LCD has cumulative two phase driving scheme(s).
28. The LCD has unipolar driving scheme(s).
29. The LCD has multiple selection driving scheme(s).
30. Lower threshold voltage can be achieved in the LCD by using a longer pitch chiral nematic materials or smaller cell gap.

## Claims

1. A full spectrum black-and-white chiral nematic liquid crystal display comprising
a chiral nematic liquid crystal cell of controllable planar structure and focal conic structure, the cell comprising chiral nematic liquid crystal material between two transparent substrates having electrodes; and the cell being arranged between two circular polarizers, comprising a front and a rear circular polarizer, wherein at least one of a said front and a said rear circular polarizer is of opposite handedness to the chiral nematic liquid crystal material.

2. A display device according to Claim 1, wherein the chiral nematic liquid crystal cell is sandwiched between the front circular polarizer and the rear circular polarizer.

3. A display device according to Claim 1 or Claim 2, wherein the chiral nematic liquid crystal material has a Bragg reflection spectrum of any peak wavelength and of any circular polarization.

4. A display device according to Claim 1, Claim 2 or Claim 3, wherein both the front circular polarizer and the rear circular polarizer are of opposite handedness as the chirality of the chiral nematic liquid crystal materials.

5. A display device according to Claim 1, Claim 2 or Claim 3, wherein the front circular polarizer is of opposite handedness and the rear circular polarizer is of the same handedness as the chirality of the chiral nematic liquid crystal materials.

6. A display device according to any preceding claim, further comprising a light source.

7. A display device according to any preceding claim, further comprising a rear light source.

8. A display device according to any preceding claim, wherein the electrodes are transparent.

9. A display device according to any preceding claim, wherein the electrodes are electrically conductive.

10. A display device according to any preceding claim, wherein the circular polarizers are wideband or otherwise.

11. A display device according to any preceding claim, wherein there is a backlight under the rear circular polarizer.

12. A display device according to any preceding claim, wherein there is a transflector placed between the rear circular polarizer and the rear light source.

13. A display device according any preceding claim, having a driving scheme(s) selected from the group; static, active matrix, passive matrix, grey scale, dynamic, dual-frequency driving scheme(s).

14. A display device according to any preceding claim, wherein a lower threshold voltage can be achieved by using a longer pitch chiral nematic liquid crystal materials or smaller cell gap.

15. A display device substantially as described herein with reference to the accompanying drawings.
